# DEMANDE DE BREVET EUROPEEN

(11) **EP 1 698 669 A2**
(43) Date de publication de la demande: **06.09.2006**
(21) Numéro de dépôt: 06300191.1
(22) Date de dépôt: 02.03.2006
(51) Int. Cl.: C08L 95/00, E04D 5/02, D06N 5/00

(54) **Liant bitumineux pour étanchéité et membrane d'étanchéité**

(30) Priorité: 04.03.2005 FR 0550591
(71) Demandeur: AXTER, 75016 Paris (FR)
(72) Inventeur: Pollet-Pointeau, Sabine, 59810, Lesquin (FR); Drouily, Michel, 59553, Cuincy (FR)
(74) Mandataire: Catherine, Alain

(57) **Abrégé**

Liant bitumineux élastomère pour membrane d'étanchéité, composé d'un bitume ; d'un ou de plusieurs polymères comportant au moins du Styrène Butadiène Styrène ; et, d'une ou de plusieurs charges minérales. Le liant selon l'invention se caractérise en ce qu'il est également composé d'un silicate hydraté de sorte que ledit liant comporte entre 3 à 20% en poids dudit mélange Styrène Butadiène Styrène/phyllosilicate. Le silicate hydraté est de préférence de la Sépiolite.

## Description

La présente invention a pour domaine les matériaux bitumineux utilisés dans la construction de maisons individuelles, d'immeubles ou de locaux industriels, d'ouvrages d'art ou de génie civil ou l'équivalent. Plus particulièrement l'invention a pour domaine les matériaux bitumineux en vue de réaliser l'étanchéité par exemple des toitures, des terrasses, des ponts, des ouvrages enterrés ou l'équivalent.

D'une manière générale, les matériaux bitumineux forment des membranes. Les membranes d'étanchéité d'épaisseur importante sont dénommées chapes ; les membranes d'étanchéité d'épaisseur réduite sont dénommées films.

II est connu d'utiliser soit des membranes d'étanchéité préfabriquées se présentant alors par exemple sous forme de rouleaux, soit des membranes sous forme liquide mises en oevre in situ à chaud ou à froid.

Les membranes d'étanchéité peuvent comporter une couche fibreuse composée de fibres, tissées ou non tissées. Il peut s'agir de fibres de polyamide, de verre, de polyester ou l'équivalent, utilisées seules ou en combinaison. Les fibres forment une ou plusieurs armatures renforcées par imprégnation d'un liant bitumineux.

Dans tous les cas, les membranes d'étanchéité comportent un liant bitumineux à base de bitume. Le terme bitume, au sens stricte, couvre à la fois l'asphalte et le brai de goudron. En variante, en substitution du bitume, le liant peut également être constitué d'un « liant clair », mélange clair d'huiles et de résines, ou d'huiles et d'élastomères. Dans la suite, nous utiliserons le terme général de « bitume » pour désigner ces différentes variantes sous la même appellation. Le liant bitumineux comporte une fraction de bitume entre environ 50 et 70% en poids

Pour conserver, entre autres caractéristiques, une certaine souplesse au matériau, il est connu de modifier le bitume par addition d'une fraction d'un ou de plusieurs polymères. Un polymère largement utilisé est le Styrène Butadiène Styrène (SBS), utilisé seul pour donner un liant bitumineux élastomère, ou en combinaison avec d'autres polymères du type polyoléfine (APP, TPO, ou combinaisons de celles-ci). Le liant bitumineux comporte de préférence entre 3 et 20% en poids de SBS, et de manière préférentielle environ 12% en poids.

Enfin le liant bitumineux comporte entre environ 10 et 45% en poids d'une charge. Il s'agit d'une poudre minérale dénommée « filler », comme du calcaire, de l'ardoise, de l'oxyde de magnésium, de l'hydrate d'aluminium ou d'autres poudres naturelles utilisées seules ou en mélange.

Il s'avère que la résine SBS est un polymère dont le prix de revient est élevé. Par conséquent, les liants bitumineux connus incorporant du SBS restent des produits onéreux.

L'invention a donc pour but de résoudre ou de réduire cet inconvénient de coût en proposant une alternative aux liants bitumineux à base de SBS selon l'art antérieur tout en conservant les propriétés physico-chimiques reconnues de ces derniers.

L'invention a pour objet un liant bitumineux élastomère pour membrane d'étanchéité, comportant un bitume ; un ou plusieurs polymères qui comportent au moins du Styrène Butadiène Styrène (SBS) ; et, une ou plusieurs charges minérales. Selon l'invention le liant bitumineux se caractérisé en ce qu'il comporte également un phyllosilicate.

Dans un mode de réalisation actuellement préféré, le phyllosilicate est un silicate de magnésium hydraté, de préférence la sépiolite.

De préférence, le mélange SBS / sépiolite constitue entre 3 et 20% en poids du liant bitumineux. De préférence encore, la fraction de sépiolite constitue entre 5 et 25% en poids du SBS.

Dans un premier mode de réalisation préférentiel, le liant bitumineux comporte 54% en poids de bitume et 11,0% en poids du mélange SBS/sépiolite. Dans un deuxième mode de réalisation préférentiel le liant bitumineux comporte 58% en poids de bitume et 7,0% en poids du mélange SBS/sépiolite. Dans un troisième mode de réalisation préférentiel le liant bitumineux comporte 60% en poids de bitume et 5,0% en poids du mélange SBS/sépiolite.

Dans ces modes de réalisation préférentiels, la fraction de sépiolite peut constituer 10% en poids du SBS dans le mélange SBS/sépiolite. En variante, la fraction de sépiolite peut constituer 25% en poids du SBS dans le mélange SBS/sépiolite.

En variante, le liant bitumineux comporte un additif ignifugeant.

L'invention a également pour objet une membrane renforcée comportant une ou plusieurs armatures fibreuses et un liant bitumineux tel qu'exposé ci-dessus, le textile étant renforcé par imprégnation par le liant bitumineux.

L'invention a également pour objet une étanchéité coulée in situ soit à chaud, le liant étant alors le liant bitumineux tel qu'exposé ci-dessus, soit à froid, la partie non volatile du liant étant alors le liant bitumineux tel qu'exposé ci-dessus.

D'autres caractéristiques et avantages de l'invention ressortiront de la description d'exemples de réalisation et d'exemples de mise en oeuvre.

Le tableau suivant donne trois compositions actuellement envisagées pour un liant bitumineux comportant de la Sépiolite :

| Liant | Bitume | SBS | | Sépiolite | | Charge |
|---|---|---|---|---|---|---|
| | | % par rapport au bitume + SBS | % par rapport Bitume + SBS + charge | % par rapport au SBS | % par rapport Bitume + SBS + charge | |
| 1 | 54% | 15,3 | 10,0 | 11,2 | 1,1 | 35,0% |
| | | 13,6 | 8,8 | 25,0 | 2,2 | |
| 2 | 58% | 9,9 | 6,4 | 10,9 | 0,7 | 35,0% |
| | | 8,8 | 5,7 | 24,6 | 1,4 | |
| 3 | 60% | 7,2 | 4,6 | 10,9 | 0,5 | 35,0% |
| | | 6,4 | 4,0 | 25,0 | 1,0 | |

Dans le premier mode de réalisation, le liant bitumineux comporte 11% en poids du mélange SBS/sépiolite. Dans une première variante, la sépiolite représente environ 10% du poids du SBS. Dans une seconde variante de ce premier mode de réalisation préférentiel, la sépiolite représente environ 25% du poids du SBS.

Dans le deuxième mode de réalisation, le liant bitumineux comporte 7% en poids du mélange SBS/sépiolite. Dans une première variante, la sépiolite représente environ 10% en poids du SBS. Dans une seconde variante de ce deuxième mode de réalisation, la sépiolite représente environ 25% en poids du SBS.

Dans le troisième mode de réalisation, le liant bitumineux comporte 5% en poids du mélange SBS/sépiolite. Dans une première variante, la sépiolite représente environ 10% en poids du SBS. Dans une seconde variante de ce troisième mode de réalisation préférentiel, la sépiolite représente environ 25% en poids du SBS.

La demanderesse a constaté que le liant bitumineux selon l'invention présente des propriétés physiques voisines, si ce n'est meilleures que celles des liants bitumineux classiques comportant uniquement du SBS : la performance en déformation par pliage à froid est conservée à l'état neuf ; la température de Bille-Anneau, ainsi que les propriétés d'allongement élastique sont également conservées à l'état neuf ; la tenue dans le temps du liant bitumineux selon l'invention est meilleure. En particulier, il résiste de manière plus durable aux effets de l'oxydation et du vieillissement thermique qui caractérisent traditionnellement la durabilité d'un liant.

Sans être tenu par aucun modèle théorique permettant de rendre compte des propriétés du liant bitumineux selon la présente invention, il semble pourtant que l'amélioration constatée des performances du liant bitumineux soit due à la formation de « ponts » ou de « micelles » de Sépiolite entre des agrégats de SBS.

II apparaît également que d'autres phyllosilicates, et plus particulièrement des silicates de magnésium hydraté, famille à laquelle appartient la sépiolite, peuvent être mélangés au SBS dans les liants bitumineux. Par ailleurs, des carrières de sépiolite sont actuellement exploitées et la sépiolite produite est commercialisée.

Avantageusement, le liant bitumineux selon l'invention en incorporant une fraction d'un phyllosilicate tel que la sépiolite permet de réduire la fraction de SBS utilisée. Le coût de la sépiolite étant actuellement environ quatre fois plus faible que celui de la résine SBS, le liant bitumineux selon l'invention est d'une mise en oevre moins coûteuse que la mise en oevre d'un liant bitumineux classique comportant uniquement du SBS.

Le liant bitumineux selon l'invention peut être mis en oevre in situ à chaud : pour cela le liant bitumineux est chauffé sur place jusqu'à obtenir une pâte fluide visqueuse. Celle-ci est ensuite versée par exemple sur la toiture à étanchéifier, étalée par exemple manuellement par un ouvrier au moyen d'un outil. Le liant bitumineux prend sa place sous l'effet de la gravitation et se rigidifies en se refroidissant formant ainsi la membrane d'étanchéité.

Le liant bitumineux selon l'invention peut également être mis en oevre in situ à froid : pour cela il est fluidifié par mélange dans un solvant volatile. Le fluide obtenu est étendu par exemple sur la toiture à étanchéifier. Le solvant s'évapore progressivement conduisant à la formation de la membrane d'étanchéité.

Bien que l'invention ait été décrite en liaison avec un mode de réalisation particulier, il est bien évident qu'elle n'est nullement limitée et qu'elle comprend tous les équivalents techniques des moyens décrits ainsi que leurs combinaisons qui entrent dans le cadre de l'invention.

## Revendications

1. Liant bitumineux élastomère pour membrane d'étanchéité, comportant :
- un bitume ;
- un ou plusieurs polymères qui comportent au moins du Styrène Butadiène Styrène (SBS) ; et,
- une ou plusieurs charges minérales comportant au moins un phyllosilicate,
le mélange SBS / phyllosilicate constituant entre 3 et 20% en poids dudit liant bitumineux, **caractérisé en ce que** la fraction dudit phyllosilicate représente entre 5 et 25 % en poids dudit SBS.

2. Liant selon la revendication 1, **caractérisé en ce que** ledit phyllosilicate est un silicate de magnésium hydraté.

3. Liant selon la revendication 2, **caractérisé en ce que** ledit silicate de magnésium hydraté est de la sépiolite.

4. Liant selon la revendication 3, **caractérisé en ce qu'**il comporte 54% en poids de bitume et 11,0% en poids du mélange SBS/sépiolite.

5. Liant selon la revendication 3, **caractérisé en ce qu'**il comporte 58% en poids de bitume et 7,0% en poids du mélange SBS/sépiolite.

6. Liant selon la revendication 3, **caractérisé en ce qu'**il comporte 60% en poids de bitume et 5,0% en poids du mélange SBS/sépiolite.

7. Liant selon l'une quelconque des revendications 4 à 6, **caractérisé en ce que** la fraction de sépiolite constitue 10% en poids du SBS dans ledit mélange SBS/sépiolite.

8. Liant selon l'une quelconque des revendications 4 à 7, **caractérisé en ce que** la fraction de sépiolite constitue 20% en poids du SBS dans le mélange SBS/sépiolite.

9. Liant selon l'une quelconque des revendications 1 à 8, **caractérisé en ce qu'**il comporte au moins un additif ignifugeant.

10. Membrane renforcée comportant une ou plusieurs armatures fibreuses et un liant bitumineux, lesdites armatures étant renforcées par imprégnation par ledit liant bitumineux, **caractérisé en ce que** ledit liant bitumineux est un liant bitumineux selon l'une quelconque des revendications 1 à 9.

11. Etanchéité coulée in situ à chaud, **caractérisée en ce que** son liant est un liant bitumineux selon l'une quelconque des revendications 1 à 9.

12. Etanchéité coulée in situ à froid, **caractérisée en ce que** la partie non volatile de son liant est un liant bitumineux selon l'une quelconque des revendications 1 à 9.
